# EUROPÄISCHE PATENTSCHRIFT

(11) **EP 1 078 893 B1**
(45) Veröffentlichungstag und Bekanntmachung des Hinweises auf die Patenterteilung: **23.03.2005**
(21) Anmeldenummer: 00115962.3
(22) Anmeldetag: 26.07.2000
(51) Int. Cl.: C03C 3/091, C03C 3/093

(54) **Alkalifreie Aluminoborosilicatgläser und deren Verwendungen**
Alkali-free aluminoborosilicate glasses and their applications
Verres aluminoborosilicates dépourvus d'alcalins et leurs utilisations

(30) Priorität: 21.08.1999 DE 19939789
(43) Veröffentlichungstag der Anmeldung: 28.02.2001
(73) Patentinhaber: Schott AG, 55122 Mainz (DE)
(72) Erfinder: Peuchert, Ulrich, Dr., 55129 Mainz (DE); Pfeiffer, Thomas, Dr., 55218 Ingelheim (DE); Brix, Peter, Dr., 55116 Mainz (DE); Römer, Hildegard, Dr., 61184 Karben (DE)

(56) Entgegenhaltungen:
- EP-A- 0 509 792
- WO-A-98/27019
- DE-A- 19 601 922
- PATENT ABSTRACTS OF JAPAN vol. 1997, no. 06, 30. Juni 1997 (1997-06-30) & JP 09 048632 A (NIPPON ELECTRIC GLASS CO LTD), 18. Februar 1997 (1997-02-18)
- PATENT ABSTRACTS OF JAPAN vol. 1997, no. 10, 31. Oktober 1997 (1997-10-31) & JP 09 156953 A (NIPPON ELECTRIC GLASS CO LTD), 17. Juni 1997 (1997-06-17)

## Beschreibung

Die Erfindung betrifft alkalifreie Aluminoborosilicatgläser. Die Erfindung betrifft auch Verwendungen dieser Gläser.

An Gläser für Anwendungen als Substrate in der Flüssigkristall- Flachdisplaytechnologie, z. B. in TN (Twisted Nematic)/STN (Super Twisted Nematic) - Displays, Active Matrix Liquid Crystal Displays (AMLCD's), Thin Film Transistors (TFT's) oder Plasma Adressed Liquid Crystals (PALC's) werden hohe Anforderungen gestellt. Neben einer hohen Temperaturwechselbeständigkeit sowie einer guten Resistenz bezüglich der im Herstellungsverfahren der Flachbildschirme eingesetzten aggressiven Chemikalien sollten die Gläser einen über einen weiten Spektralbereich (VIS, UV) hohe Transparenz sowie zur Gewichtseinsparung eine relativ geringe Dichte ρ, vorzugsweise ≤ 2,600 mg/cm³, aufweisen. Der Einsatz als Trägermaterial für integrierte Halbleiterschaltkreise z. B. TFT-Displays ("chip on glass") erfordert darüber hinaus die thermische Anpassung an das Dünnfilmmaterial a- bzw. poly-Silicium (α_{20/300} ≅ 3,7 • 10⁻⁶/K) sowie die Abwesenheit von Alkaliionen. Herstellungsbedingte Anteile von Natriumoxid unterhalb 1000 ppm sind in Hinblick auf die i. a. "vergiftende" Wirkung durch Eindiffusion von Na⁺ in die Halbleiterschicht noch tolerierbar.

Geeignete Gläser sollten großtechnisch in ausreichender Qualität z. B. auf einer Floatanlage oder in Ziehverfahren wirtschaftlich produzierbar sein. Besonders die Herstellung dünner (< 1 mm) streifenfreier Substrate von geringer Oberflächenwelligkeit über Ziehverfahren erfordert eine hohe Entglasungsstabilität der Gläser. Ein auf die Halbleiter-Microstruktur nachteilig wirkender Schrumpf ("compaction") des Substrates während der Herstellung kann durch Einstellen einer geeigneten temperaturabhängigen Viskositätskennlinie des Glases entgegengewirkt werden: Hinsichtlich der thermischen Prozeß- und Formstabilität sollte es bei einerseits nicht zu hohen Schmelz- und Verarbeitungs (V_{A}) - temperaturen, d. h. bei einem V_{A} ≤ 1330 °C, eine ausreichend hohe Transformationstemperatur T_{g}, d. h. eine Transformationstemperatur T_{g} von wenigstens 650°C, aufweisen.

Die Anforderungen an Glassubstrate für die LCD-Displaytechnologie sind auch in "Glass Substrates for AMLCD applications: properties and implications" von J.C. Lapp, SPIE Proceedings, Vol. 3014, Invited paper (1997) beschrieben.

Prinzipiell übereinstimmende Anforderungen werden an Gläser für Substrate in der Dünnschicht-Photovoltaik, speziell auf Basis von microkristallinem Silicium (µc-Si), gestellt.

Eine wesentliche Voraussetzung für die wirtschaftliche Durchsetzung der Dünnschicht-Photovoltaik gegenüber der kostenintensiven Solartechnologie auf Basis kristalliner Si-Wafer ist das Vorhandensein kostengünstiger hochtemperaturbeständiger Substrate.
Zur Herstellung von Dünnschicht-Solarzellen auf Basis von kristallinem Si sind derzeit zwei unterschiedliche Beschichtungsverfahren bekannt. Besonders günstig in Hinsicht auf hohe Schichtqualität und damit Wirkungsgrade sowie hohe Abscheidungsgeschwindigkeiten erweist sich ein Hochtemperatur - CVD- Prozeß mit dem billigen Trichorsilan als Si-Quelle. Dieses Verfahren sieht die direkte Abscheidung dünner kristalliner Si-Schichten vor und erfordert die Aufheizung einer geeigneten Unterlage auf 1000°C und darüber hinaus. Als Substrate kommen dann nur vergleichsweise teure Keramik, Graphit, Silicium oder ähnliche Materialien in Frage. Auch der Einsatz von ebenfalls teuren Glaskeramiken wird diskutiert.

Als Alternative dazu werden Si-Niedertemperaturabscheideprozesse entwickelt, welche den Einsatz des billigeren Substratmaterials Glas gestatten. Als eine Möglichkeit bietet sich dabei die Abscheidung amorphen Siliciums bei niedrigen Temperaturen bis 300°C sowie in einem Folgeschritt die Rekristallisation der Schichten z. B. über Laser- bzw. zone-melting-Verfahren unter Bildung teilkristalliner µc-Si-Schichten an. Um Verformungen der Glasplatte bei den im Temperprozeß herrschenden Temperaturen zu vermeiden, ist ein an Silicium thermisch angepaßtes Spezialglas mit hoher Temperaturbeständigkeit erforderlich, wie sie bei Gläsern mit Transformationstemperaturen T_{g} von wenigstens 650 °C gegeben ist. Auch für Substrate für die TFT-Displaytechno-logie ist infolge der Tendenz, von a-Si- auf zunehmend kristalline poly-Si-Beschichtungen überzugehen, eine möglichst hohe Temperaturbeständigkeit des Substrates erwünscht. Da mit zunehmender Kristallinität der Si-Schichten deren thermische Ausdehnung abnimmt, sind hier auch Gläser mit sehr geringer Dehnung α _{20/300} bis 3,0 • 10 ⁻⁶/K und weniger erwünscht.

Die derzeitige Entwicklung der µc-Si-Technologie geht in Richtung eines Substrat-Konzeptes, d. h. das Trägermaterial bildet die Basis der Solarzellen und wird nicht vom einfallenden Licht passiert. Daneben ist eine Entwicklung hin zur kostengünstigeren Superstrat-Anordnung (Licht passiert Trägermaterial, kein Deckglas notwendig) nicht ausgeschlossen. Zur Erzielung hoher Wirkungsgrade ist dann eine hohe Transparenz des Glases im VIS/UV erforderlich, wodurch sich der Einsatz von semi-transparenten Glaskeramiken, neben den oben aufgeführten Kostengründen, als nachteilig erweist.

Für die letztgenannte Anwendung (Superstrat) sowie für die genannten Anwendungen als Display-Substrate ist die Qualität der Gläser bzgl. Zahl und Größe von Fehlern wie festen Einschlüssen und Blasen von großer Bedeutung, da sie die Transparenz der Gläser beeinträchtigen.

Die Gläser sollen also möglichst blasen- und schlierenfrei oder zumindest -arm sein. Insbesondere unter den Gläsern, die im Floatverfahren verarbeitet werden, ist ein gut geläutertes Glas nur schwierig zu erhalten, da die bekannten effektiven Läutermittel As₂O₃ und Sb₂O₃ aufgrund ihrer leichten Reduzierbarkeit unter den Bedingungen des Floatbades nicht eingesetzt werden können.

Auch an Gläser für Lampenkolben werden ähnliche Anforderungen gestellt:
Gläser für Halogenlampen müssen im wesentlichen alkalifrei sein, da Alkaliionen den regenerativen Halogenkreislauf der Lampe stören. Die Gläser müssen thermisch hochbelastbar sein, da üblicherweise im Betrieb hohe Kolbentemperaturen auftreten. Die Gläser müssen ausreichend entglasungsstabil sein, um für den Rohzug geeignet zu sein. Für die Verwendung als Lampenkolbenglas für Lampenkolben, die Molybdän-Komponenten als Elektroden- oder Zuleitungsmaterial enthalten, muß die thermische Dehnung der Gläser an die des Molybdäns (α_{20/300} = 5,0 • 10⁻⁶/K) angepaßt sein, damit eine dichte spannungsfreie Verschmelzung zwischen dem Metall und dem Glas erzielt wird. Auch für diese Verwendung sollen die Gläser möglichst blasenarm sein.

Das oben geschilderte komplexe Anforderungsprofil wird am ehesten durch Borosilicatgläser aus der Familie der Subfamilie der Erdalkali- Aluminoborosilicatgläser erfüllt. Auch die kommerziell erhältlichen Gläser für TFT- AMLCD-Anwendungen gehören zu dieser Glasart. Es sind auch schon zahlreiche Schriften der Patentliteratur bekannt, die Gläser für die genannten Verwendungen beschreiben:

EP 672 629 A2 bzw. US 5,508,237 beschreiben Aluminosilicatgläser für Flachdisplays. Sie zeigen verschiedene Zusammensetzungsbereiche mit verschiedenen thermischen Ausdehnungskoeffizienten. Diese Gläser sollen angeblich nicht nur mit dem Overflow-Fusion-Ziehverfahren, sondern auch mit anderen Flachglasherstellungsverfahren verarbeitbar sein. Jedoch werden insbesondere die Gläser, die eine an polykristallines Si angepaßten thermischen Ausdehnungskoeffizienten haben, sehr hohe Verarbeitungstemperaturen V_{A} aufweisen, die sie für den Floatprozeß ungeeignet machen. Die visuelle Qualität der Gläser wird nicht hoch sein, da kein Weg zu einer effektiven, insbesondere einer floatverträglichen Läuterung, gezeigt wird. Die beispielhaft genannten Läutermittel Sb₂O₃ und As₂O₃ sind aufgrund ihrer leichten Reduzierbarkeit für den Floatprozeß ungeeignet. Gleiches gilt für die optionalen Glaskomponenten Ta₂O₅ und Nb₂O₅. Gleiches gilt für die in den Schriften US 5,374,595, WO 98/270 19, EP 714 862 A1, EP 341 313 B1 und JP 10-722 37 A beschriebenen alkalifreien Gläser für TFT-Displayanwendungen. Auch die Gläser der JP 8-295530 A, JP 9-48632 A und JP 9-156 953 A sind nicht effektiv läuterbar

Ein ähnliches, wenn auch geringeres, Defizit weisen auch noch die Gläser mit weiten Zusammensetzungsbereichen der Schriften WO 97/11919 und WO 97/11920 auf, auch wenn hier SnO₂ zumindest als fakultatives Läutermittel genannt ist.

JP 10-139467 A beschreibt alkalifreie Gläser mit hohen Säurebeständigkeiten für Diplayanwendungen, bei denen SnO₂, TiO₂ und ZrO₂ jeweils fakultive Komponenten sind, wobei deren Summe wenigstens 0,1 mol-% beträgt. Weitere Angaben zur Läuterung werden nicht gemacht.

Dokumentiert wird die gute Läuterwirkung von SnO₂ in alkalifreien Erdalkalialuminoborosilicatglasschmelzen in den Patentschriften DE 196 17 344 C1 und DE 196 03 698 C1. Deren zinnhaltige Gläser weisen nicht nur für deren Verwendung als TFT-Displayglas gute Grundglaseigenschaften auf, sondern sind mit hoher Produktqualität herstellbar. Auch die ungeprüfte japanische Veröffentlichung JP 10-59741 A beschreibt mit SnO₂ geläuterte alkalifreie Gläser, wiederum aus einem weiten Zusammensetzungsbereich.

Bei den in der Patentschrift DE 197 39 912 C1 beschriebenen zinkfreien Aluminoborosilicatgläsern hat sich gezeigt, daß die Kombination von SnO₂ und CeO₂ die Läuterwirkung von SnO₂ durch Stabilisierung des Redoxgleichgewichtes SnO₂/SnO signifikant übertrifft. Die dort beschriebenen sehr kristallisationsstabilen Gläser sind großtechnisch herstell- und sowohl im Floatverfahren als auch in den verschiedensten Ziehverfahren wie Microsheet-Down-Drawoder Overflow-Fusion-Verfahren verarbeitbar.

Dagegen weisen JP 10-130034 A und JP 10-114538 A auf die besondere Läuterwirkung der Kombination As₂O₃ + SnO₂ sowie Sb₂O₃ + SnO₂ hin. Im Gegensatz zur kombinierten SnO₂/CeO₂-Läuterung besteht dabei jedoch ein großes Gefahrenpotential bzgl. der Korrosion von Platinwerkstoffteilen im Interfaceund Heißformgebungsbereich. DE 196 01 922 A1 beschreibt SnO- und ZrO₂-haltige alkalifreie Erdalkalialuminoborosilicatgläser, die sehr gute Kristallisationsbeständigkeiten besitzen, obwohl sowohl SnO als auch ZrO₂, wenn sie einzeln zugesetzt werden, die Kristallisationsneigung erhöhen sollen.

Es ist nun Aufgabe der Erfindung, Gläser bereitzustellen, die eine hohe innere Glasqualität aufweisen, die hochtemperaturbeständig und gut schmelz- und verarbeitbar sind, die eine gute chemische Beständigkeit und thermische Ausdehnungskoeffizienten α_{20/300} zwischen 2,8 und 5,0 • 10⁻⁶/K besitzen.

Diese Aufgabe wird durch die Gläser gemäß Patentanspruch 1 gelöst. Verwendungen der Gläser finden sich in den Ansprüchen 7 bis 9.

Die Gläser enthalten 50 - 70 Gew.-% des Netzwerkbildners SiO₂. Bei geringeren Gehalten verschlechtern sich die chemische Beständigkeit und die Temperaturbeständigkeit der Gläser. Höhere Gehalte an SiO₂ erhöhen die Viskosität der Schmelze bei hohen Temperaturen und verschlechtern damit die Schmelzbarkeit der Gläser. Auch erhöht sich ihre Entglasungsneigung, wobei es insbesondere zu kristallinen Ausscheidungen von SiO₂ als Cristobalit kommen kann. Bevorzugt ist ein Gehalt von 53 - 68 Gew.-%, besonders bevorzugt ein Gehalt von > 55 - 65 Gew.-%. Ganz besonders bevorzugt ist ein Gehalt von > 58 Gew.-% SiO₂.

Der Gehalt an Al₂O₃ beträgt zwischen 10 und 25 Gew.-%. Höhere Gehalte wirken sich nachteilig auf die Prozeßtemperaturen bei der Heißformgebung aus, da die Verarbeitungstemperatur V_{A} stark erhöht würde. Geringere Gehalte erhöhen die Kristallisationsanfälligkeit der Gläser und setzten die Transformationstemperatur T_{g} und damit die thermische Stabilität der Gläser herab. Bevorzugt ist ein Gehalt zwischen 12 und 24 Gew.-%, besonders bevorzugt zwischen > 14 und 23 Gew.-%

B₂O₃, ebenfalls Netzwerkbildner, ist in den Gläsern mit 0,5 - 15 Gew.-% vorhanden. Höhere Anteile würde die chemische Beständigkeit gegenüber Säuren sowie die thermische Stabilität der Gläser herabsetzen. Bei geringeren Anteilen wäre die schmelzerleichternde Wirkung des B₂O₃ oder der Borsäure noch nicht sehr ausgeprägt und würde die Kristallisationsstabilität verringert. Bevorzugt sind Gehalte zwischen 3, vorzugsweise 4 und 13 Gew.-%, besonders bevorzugt zwischen 5 und 11 Gew.-%.

Der Erdalkalioxid-Gesamtgehalt und seine konkrete Realisierung mittels eines oder bevorzugt mehrerer Oxide kann innerhalb eines relativ großen Bereiches variieren, so daß thermische Ausdehnungen zwischen α _{20/300} = 2,8 • 10⁻⁶/K und α _{20/300} = 5,0 • 10⁻⁶/K erhalten werden: So können die Gläser 0 - 10 Gew.-% MgO, 0 - 12 Gew.-% CaO, 0 - 12 Gew.-% SrO, 0 - 15 Gew.-% BaO enthalten, wobei die Summe aus diesen Oxiden wenigstens 8 Gew.-% und höchstens 26 Gew.-% beträgt, bevorzugt ist eine Summe zwischen 8 und 24 Gew.-%, besonders bevorzugt zwischen 8 und 21 Gew.-%. Ganz besonders bevorzugt ist ein Erdalkalioxidgehalt von wenigstens 9 Gew.-%. Insbesondere für Gläser mit eher niedrigen Ausdehnungskoeffizienten (α _{20/300} ≤ 4,0 • 10⁻⁶/K) ist es bevorzugt, die Summe der Erdalkalioxide auf maximal 18 Gew.-% zu beschränken.
Mit dem Ziel einer niedrigen Temperatur bei der Viskosität 10⁴ dPas, einer guten Schmelzbarkeit sowie einer geringen Dichte ist das Vorhandensein der leichten Oxide MgO und/oder CaO bevorzugt. Bevorzugt sind beide Oxide vorhanden. Bevorzugt ist ihr Maximalgehalt von jeweils 9 Gew.-%. Bevorzugt ist ein Mindestgehalt an MgO von wenigstens 0,5 Gew.-%. Besonders bevorzugt ist ein Gehalt von 0,5 - 8 Gew.-% CaO und 3,3 - 8 Gew.-% MgO. Höhere Gehalte als die genannten 10 bzw. 12 Gew.-% würden die chemische Beständigkeit, insbesondere gegenüber gepufferter Flußsäurelösung sowie die Entglasungsstabilität herabsetzen. Ganz besonders bevorzugt ist ein Mindestgehalt von > 4 Gew.-% MgO.

Zwar ist es im Hinblick auf einen einfache Gemengefertigung vorteilhaft, möglichst wenig verschiedene Erdalkalioxide einzusetzen, jedoch erhöht bereits das Vorhanden sein geringer Mengen weiterer Oxide die Kristallisationsstabilität der Gläser. Speziell SrO und BaO wirken sich vorteilhaft auf die Temperatur- und auf die Kristallisationsstabilität aus. Daher ist auch das Vorhandensein von SrO bevorzugt. Bevorzugt ist ein Maximalgehalt von 9 Gew.-% SrO und von 12 Gew.-% BaO. Besonders bevorzugt ist ein Gehalt von 0,5 - 8 Gew.-% SrO sowie das zusätzliche Vorhandensein von BaO mit maximal 10 Gew.-%.

Besonders hoch temperaturbeständige Gläser weisen geringe B₂O₃-Gehalte, vorzugsweise < 5 Gew.-%, und relativ hohe SiO₂-Gehalte auf. Gläser mit hohen Ausdehnungskoeffizienten (α _{20/300} ≥ 4,0 • 10⁻⁶/K) enthalten eher hohe Anteile an Erdalkalioxiden, vorzugsweise bis zu 25 Gew.-%. So besitzen Gläser mit besonderer Eignung als hochtemperaturbeständige Gläser, z. B. als hoch temperaturbeständige Lampengläser, geringe B₂O₃-Gehalte, vorzugsweise sogar ≤ 3 Gew.-%, sowie vergleichsweise hohe SrO- und vor allem hohe BaO-Gehalte. Dadurch weisen sie eine vergleichsweise höhere Dichte auf. Gläser mit niedrigen Ausdehnungskoeffizienten (α _{20/300} ≤ 4,0 • 10⁻⁶/K) enthalten eher wenig Erdalkalioxide, vorzugsweise ≤ 18 Gew.-%, sich zusammensetzend aus vorzugsweise bis zu 7 Gew.-% MgO, bis zu 7 Gew.-% CaO, bis zu 7 Gew.-% SrO und bis zu 5 Gew.-% BaO. Besonders bevorzugt sind bei diesen Gläsern Netzwerkbildner-Anteile von 60 ± 2 Gew.-% SiO₂, 17 ± 2 Gew.-% Al₂O₃ und 7,5 ± 1,5 Gew.-% B₂O₃.

Die erfindungsgemäßen Gläser können weiter bis zu 10 Gew.-% ZnO, bevorzugt bis zu 5 Gew.-% ZnO enthalten. Mit seinem der Borsäure ähnelndem Einfluß auf die Viskositätskennlinie wirkt ZnO netzwerklockernd. Insbesondere bei einer Verarbeitung der Gläser im Floatverfahren wird der Gehalt an ZnO vorzugsweise auf eher geringe Mengen (≤ 2 Gew.-%) beschränkt oder wird auf ZnO ganz verzichtet.

Die Gläser können bis zu 5 Gew.-%, bevorzugt bis zu 3 Gew.-%, besonders bevorzugt bis zu 2 Gew.-% ZrO₂ enthalten. ZrO₂ erhöht die Temperaturbeständigkeit der Gläser. Nachteilhaft ist jedoch seine Schwerlöslichkeit, wodurch es zu ZrO₂-haltigen Schmelzrelikten, sogenannten Zirkonnestern, kommen kann. Daher wird vorzugsweise auf ZrO₂ verzichtet, wobei Verunreinigungen von bis zu ca. 0,5 Gew.-%, beispielsweise infolge der Korrosion vom Feuerfestmaterial der Wannen, nicht störend sind.

Die Gläser können bis zu 5 Gew.-%, bevorzugt bis zu 3 Gew.-% TiO₂ enthalten. TiO₂ verringert die Solarisationsneigung der Gläser. Bei Gehalten > 5 Gew.-% TiO₂ können durch Komplexbildung mit Fe³⁺-Ionen, die aus Verunreinigungen der üblicherweise eingesetzten Rohstoffe stammen, Farbstiche auftreten. Vorzugsweise wird daher auf TiO₂ verzichtet.

Erfindungswesentlicher Bestandteil der Gläser ist MoO₃. Schon geringe Mengen dieser Komponente bewirken bei diesen hochschmelzenden Aluminoborosilicatgläsern eine hohe innere Glasqualität, d. h. einen hohe Qualität hinsichtlich Blasen- und Schlierenfreiheit bzw. -armut. Daher enthalten die Gläser 0,05 - 2 Gew.-%, bevorzugt 0,1 - 1,5 Gew.-% MoO₃. Die Wirksamkeit dieses Bestandteils im Vergleich zu anderen Komponenten wie SnO₂ und/oder As₂O₃ wird bei den Ausführungsbeispielen illustriert. Von MoO₃ war bisher bekannt, daß es in kleinsten Mengen in Haushaltsgläsern als Entfärbungsmittel wirkt (s. Bulycheva et al.: Glass and Ceramics, Vol. 55 Nos 1-2, 1998, S. 42 f).

Aufgrund der hohen Wirksamkeit des MoO₃ kann auf die Zugabe weiterer Läutermittel verzichtet werden. Solche Gläser sind bis auf übliche Verunreinigungen frei von As₂O₃, Sb₂O₃ und SnO₂. Verunreinigungen der letztgenannten Komponente können beispielsweise bei der Herstellung der Gläser in elektrisch beheizten Wannen durch Korrosion des Elektrodenmaterials ins Glas gelangen. Der Ausschluß der beiden erstgenannten Komponenten ermöglicht einen Verarbeitung der Gläser im Floatverfahren.

Bei einer anderen Verarbeitung der Gläser, beispielsweise bei Ziehverfahren, können die Gläser zur weiteren Verbesserung der schon hohen inneren Glasqualität auch noch As₂O₃ und/oder Sb₂O₃ enthalten. Unabhängig vom Verarbeitungsverfahren ist auch der Zusatz von Halogeniden, Sulfaten und/oder CeO₂ möglich.

Weiter können die Gläser P₂O₅, Ga₂O₃, Gd₂O₃, Fe₂O₃, La₂O₃, Nb₂O₅ und/oder Ta₂O₅ enthalten. So sind beispielsweise P₂O₅ und Ga₂O₃ günstig im Hinblick auf die Kristallisationsstabilität der Gläser. Die anderen Oxide können sich vorteilhaft auf den Brechwert und die chemische Beständigkeit auswirken.

Die Gläser können auch PbO und/oder CdO enthalten. Bei einer Verarbeitung im Floatverfahren sollte jedoch auch auf diese leicht reduzierbaren Bestandteile verzichtet werden.

Die Summe der Komponenten CeO₂, As₂O₃, Sb₂O₃, PbO, CdO, P₂O₅, Ga₂O₃, Gd₂O₃, Fe₂O₃, La₂O₃, Nb₂O₃, Ta₂O₅, Halogenide, Sulfate soll, um das sonstige Eigenschaftsprofil der Gläser nicht negativ zu beeinflussen, 5 Gew.-% nicht überschreiten.

Die hohe innere Glasqualität der MoO₃-haltigen Gläser kann schon durch einen geringen Zusatz von SnO₂ noch weiter verbessert werden. Daher können die Gläser bis zu 2 Gew.-% SnO₂ enthalten. Vorzugsweise enthalten die Gläser wenigstens 0,1 Gew.-% SnO₂ und höchstens 0,5 Gew.-% SnO₂. Bei höheren Gehalten kann es im Kontakt mit Pt zu Kristallisation im Glas bzw. zu Korrosion von im Heißformgebungsbereich eingesetzten Pt kommen.

Die Gläser sind alkalifrei. Unter alkalifrei wird hierbei verstanden, daß sie im wesentlichen alkalifrei sind, d. h. daß sie Verunreinigungen von weniger als 1000 ppm enthalten können.

Die Wirkung des MoO₃ geht in den erfindungsgemäßen Gläsern weit über die eines Läutermittels hinaus: Es verbessert die Säurebeständigkeit (vgl. Beispiele A2 und V4) und die Solarisationsstabilität. Es verbessert auch die Entglasungstabilität. Mit einer erniedrigten Oberen Entlglasungsgrenze (OEG) ergibt sich eine vergrößerte Differenz T4-OEG (vgl. Beispiele A7 und V5), was einen größeren Verarbeitungsbereich bedeutet. Außerdem erhöht es die Korrosionsbeständigkeit von im Kontakt mit dem Glas bzw. mit der Schmelze stehendem Mo.

### Ausführungsbeispiele:

Aus herkömmlichen, von unvermeidlichen Verunreinigungen abgesehen im wesentlichen alkalifreien, Rohstoffen wurden bei 1620 °C acht erfindungsgemäße Gläser (A1 - A8) und 5 Vergleichsgläser (V1 - V5) in Pt/Ir-Tiegeln erschmolzen. Die Schmelzen wurde anderthalb Stunden bei dieser Temperatur geläutert, anschließend in induktiv beheizte Platintiegel umgegossen und zur Homogenisierung 30 Minuten bei 1550 °C gerührt. Vor dem Guß in vorgewärmte Formen wurden die Glasschmelzen in einem Hochtemperaturofen für ca. 30 min bei 1580 °C homogenisiert.

Die Tabelle zeigt die Zusammensetzungen der Gläser (in Gew.-% auf Oxidbasis) und ihre wichtigsten Eigenschaften. Angegeben sind:
- die Dichte ρ [g/cm³]
- der thermische Ausdehnungskoeffizient α _{20/300} [10⁻⁶/K]
- die dilatometrische Transformationstemperatur T_{g} [°C] nach DIN 52324
- die Temperatur bei der Viskosität 10⁴ dPas (bezeichnet als T 4 [°C])
- die Temperatur bei der Viskosität 10² dPas (bezeichnet als T 2 [°C]), berechnet aus dem Vogel-Fulcher-Tammann-Koeffizienten.
- Beständigkeit gegenüber Salzsäure als Gewichtsverlust (Abtragswert) von allseitig polierten Glasplättchen der Abmessungen 50 mm x 50 mm x 2 mm nach Behandlung mit 5 %iger Salzsäure für 24 Stunden bei 95°C [mg/cm²] (bezeichnet als HCI [mg/cm²]).
- Beständigkeit gegenüber gepufferter Flußsäure als Gewichtsverlust (Abtragswert) von allseitig polierten Glasplättchen der Abmessungen 50 mm x 50 mm x 2 mm nach Behandlung mit 10 %iger NH₄F • HF-Lösung für 20 min bei 23 °C [mg/cm²] (bezeichnet als BHF [mg/cm²]).
- Der Brechwert n_{d}
- Die obere Entglasungsgrenze OEG [°C], d. h. die Liquidustemperatur
- Die maximale Kristallwachstumsgeschwindigkeit vₘₐₓ [µm/h]
- die Blasenqualität; makroskopischer qualitativer Befund
   - 0: sehr viel Blasen
   - -: viele Blasen
   - +: gut geläutert
   - ++: annähernd blasenfrei
   - +++: blasenfrei

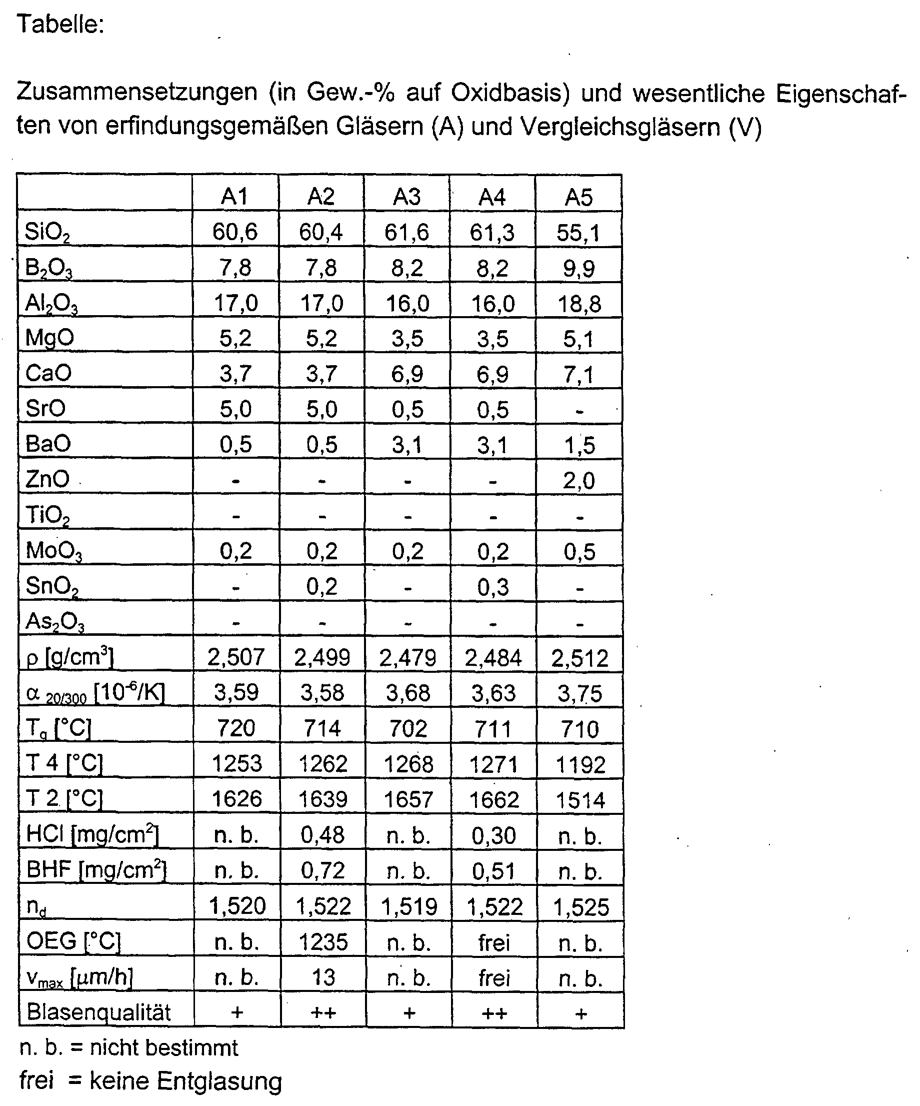

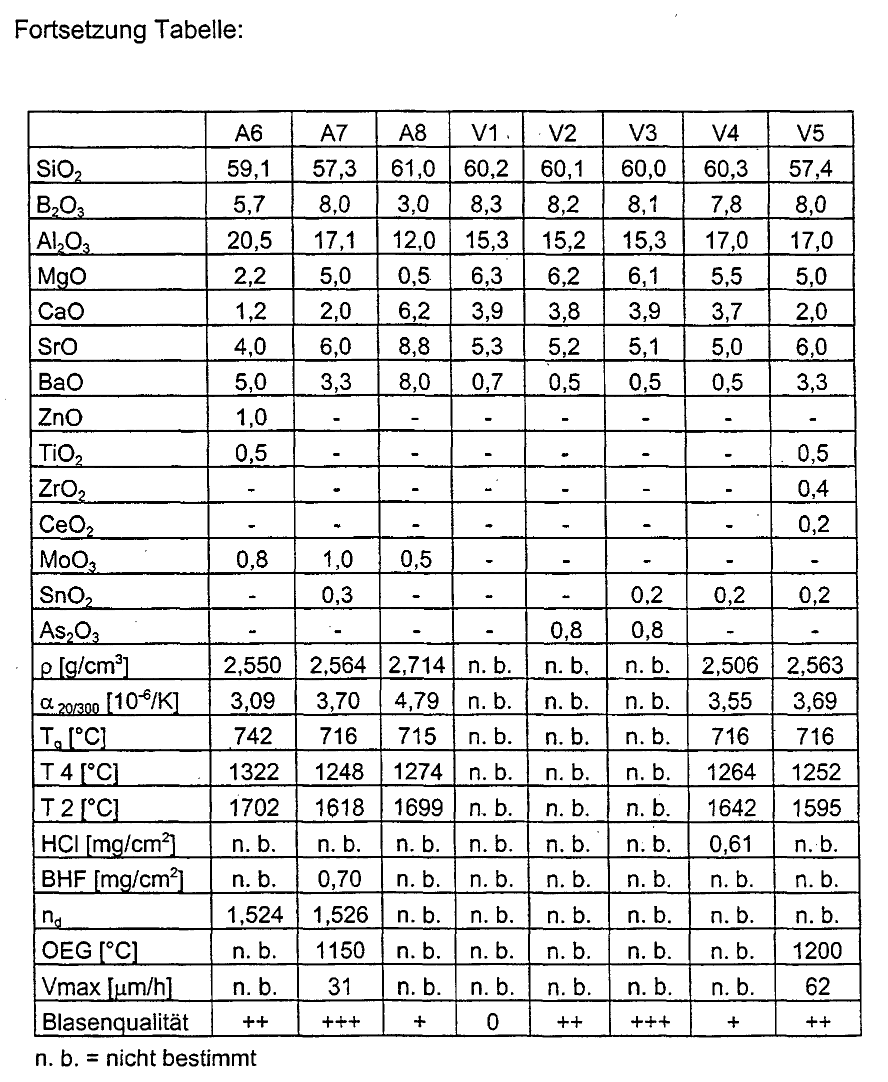

Die erfindungsgemäßen Gläser besitzen folgende vorteilhaften Eigenschaften:

Sie weisen eine hohe innere Glasqualität auf.

Sie weisen mit T_{g} > 650 °C hohe Transformationstemperaturen auf. Dies ist wesentlich für einen möglichst geringen herstellungsbedingten Schrumpf ("compaction") und für die Verwendung der Gläser als Substrate für Temperprozesse amorpher Si-Schichten.

Sie weisen Temperaturen bei der Viskosität 10⁴ dPas von maximal 1330 °C, meist sogar <1330 °C, auf, was einen prozeßgünstigeren Verarbeitungsbereich bedeutet. Außerdem weisen sie positive und relativ große Differenzen T4-OEG auf.

Sie besitzen eine gute Entglasungsstabilität. Sie besitzen eine gute chemische Beständigkeit, dokumentiert durch die gute Säurebeständigkeit, was sie ausreichend inert gegen die bei der Herstellung von Flachbildschirmen verwendeten Chemikalien macht. Sie besitzen relativ geringe Dichten.

Die Gläser verfügen über eine hohe Solarisationsstabilität und eine hohe Temperaturwechselbeständigkeit. Sie besitzen niedrige Brechwerte als physikalische Grundvoraussetzung einer hohen Transparenz.

Die Gläser sind mit den verschiedensten Verfahren verarbeitbar; so in den verschiedensten Ziehverfahren für Flachgläser, z. B. (Microsheet-) Down-Draw-, Up-Draw-Verfahren, aber auch im Rohrzugverfahren, und wenn auf As₂O₃, Sb₂O₃, PbO und CdO verzichtet wird, auch im Floatverfahren.

Die Gläser besitzen thermische Ausdehnungskoeffizienten α _{20/300} zwischen 2,8 • 10⁻⁶/K und 5,0 • 10⁻⁶/K.

Gläser mit thermischen Ausdehnungskoeffizienten ≤ 4,0 • 10⁻⁶/K sind angepaßt an das Ausdehnungsverhalten von Si (a-, poly- und µc-Si). Mit dem genannten Eigenschaftsprofil sind sie hervorragend geeignet für die Verwendung als Substratglas in der Dünnschicht-Photovoltaik, insbesondere auf Basis von µc-Si, und in der Displaytechnik, insbesondere für TFT-Displays. Durch ihren relativ geringen Erdalkaligehalt weisen sie geringe Dichten auf (ρ ≤ 2,600 g/cm³), was vor allem für die Display-Anwendungen vorteilhaft ist, um insbesondere bei großen Bildformaten das Gesamtgewicht des Displays gering zu halten.

Gläser mit Transformationstemperaturen Tg ≥ 715 °C und mit thermischen Ausdehnungskoeffizienten α _{20/300} zwischen 4,0 • 10⁻⁶/K und 5,0 • 10⁻⁶/K sind, da ihre thermische Ausdehnung an die von W bzw. Mo angepaßt ist und sie eine sehr hohe thermische Belastbarkeit besitzen, hervorragend geeignet für die Verwendung als Verschmelzgläser für W und Mo und als Kolbenglas für Lampenkolben, insbesondere Gläser mit α _{20/300} zwischen 4,5 • 10⁻⁶/K und 5,0 • 10⁻⁶/K für Mo-Komponenten aufweisende Lampenkolben, insbesondere für solche mit Kolbentemperaturen von ca. 550 - 640 °C.

## Patentansprüche

1. Alkalifreies Aluminoborosilicatglas mit hoher Qualität hinsichtlich Blasenfreiheit, das folgende Zusammensetzung (in Gew.-% auf Oxidbasis) aufweist:
| | |
|---|---|
| SiO₂ | 50 - 70 |
| B₂O₃ | 0,5 - 15 |
| Al₂O₃ | 10 - 25 |
| MgO | 0 - 10 |
| CaO | 0 - 12 |
| SrO | 0 - 12 |
| BaO | 0 - 15 |
| mit MgO+CaO+SrO+BaO | 8 - 26 |
| ZnO | 0 - 10 |
| ZrO₂ | 0 - 5 |
| TiO₂ | 0 - 5 |
| SnO₂ | 0 - 2 |
| MoO₃ | 0,05 - 2 |

2. Aluminoborosilicatglas nach Anspruch 1,
**gekennzeichnet durch**
folgende Zusammensetzung (in Gew.-% auf Oxidbasis)
| | |
|---|---|
| SiO₂ | 53 - 68 |
| B₂O₃ | 3 - 13 |
| Al₂O₃ | 12 - 24 |
| MgO | 0,5 - 9 |
| CaO | ≤ 9 |
| SrO | ≤ 9 |
| BaO | 0 - 12 |
| mit MgO+CaO+SrO+BaO | 8 - 24 |
| ZnO | 0 - 5 |
| ZrO₂ | 0 - 3 |
| TiO₂ | 0 - 3 |
| SnO₂ | 0 - 2 |
| MoO₃ | 0,1 - 1,5 |

3. Aluminoborosilicatglas nach Anspruch 1 oder 2,
**gekennzeichnet durch**
folgende Zusammensetzung (in Gew.-% auf Oxidbasis)
| | |
|---|---|
| SiO₂ | > 55 - 65 |
| B₂O₃ | 5 - 11 |
| Al₂O₃ | > 14 - 23 |
| MgO | 3,3 - 8 |
| CaO | 0,5 - 8 |
| SrO | 0,5 - 8 |
| BaO | ≤ 10 |
| mit MgO+CaO+SrO+BaO | 8 - 21 |
| ZnO | 0 - 5 |
| ZrO₂ | 0 - 2 |
| TiO₂ | 0 - 3 |
| SnO₂ | 0 - 2 |
| MoO₃ | 0,1 - 1,5 |

4. Aluminoborosilicatglas nach wenigstens einem der Ansprüche 1 bis 4,
**dadurch gekennzeichnet,**
**daß** das Glas wenigstens > 4 Gew.-% MgO enthält.

5. Aluminoborosilicatglas nach wenigstens einem der Ansprüche 1 bis 3,
**dadurch gekennzeichnet,**
**daß** das Glas zusätzlich bis zu insgesamt 5 Gew.-% von einem oder mehreren Elementen aus der Gruppe CeO₂, As₂O₃, Sb₂O₃, P₂O₅, PbO, CdO, Ga₂O₃, Gd₂O₃, Fe₂O₃, La₂O₃, Nb₂O₅, Ta₂O₅, Halogenide, Sulfate enthält.

6. Aluminoborosilicatglas nach wenigstens einem der Ansprüche 1 bis 4,
**dadurch gekennzeichnet,**
**daß** das Glas wenigstens 0,1 Gew.-% SnO₂ enthält.

7. Aluminoborosilicatglas nach wenigstens einem der Ansprüche 1 bis 6 mit einem Ausdehnungskoeffizienten α_{20/300} zwischen 2,8 • 10⁻⁶/K und 5,0 • 10⁻⁶/K, einer Transformationstemperatur T_{g} > 650 °C und einer Temperatur bei der Viskosität 10⁴ dPas von ≤ 1330 °C.

8. Verwendung eines Aluminoborosilicatglases nach wenigstens einem der Ansprüche 1 bis 7 mit einem thermischen Ausdehnungskoeffizienten α_{20/300} ≤ 4,0 • 10⁻⁶/K als Substratglas in der Displaytechnik.

9. Verwendung eines Aluminoborosilicatglases nach wenigstens einem der Ansprüche 1 bis 7 mit einem thermischen Ausdehnungskoeffizienten α_{20/300} ≤ 4,0 • 10⁻⁶/K als Substratglas in der Dünnschicht-Photovoltaik.

10. Verwendung eines Aluminoborosilicatglases nach wenigstens einem der Ansprüche 1 bis 7 mit einem thermischen Ausdehnungskoeffizienten α_{20/300} zwischen 4,0 • 10⁻⁶/K und 5,0 • 10⁻⁶/K und einer Transfomationstemperatur T_{g} ≥ 715 °C als Kolbenglas für Lampenkolben.

## Claims

1. Alkali-free aluminoborosilicate glass of high quality with respect to freedom from bubbles, which has the following composition (in % by weight, based on oxide):
| | |
|---|---|
| SiO₂ | 50 - 70 |
| B₂O₃ | 0.5 - 15 |
| Al₂O₃ | 10 - 25 |
| MgO | 0 - 10 |
| CaO | 0 - 12 |
| SrO | 0 - 12 |
| BaO | 0 - 15 |
| with MgO+CaO+SrO+BaO | 8 - 26 |
| ZnO | 0 - 10 |
| ZrO₂ | 0 - 5 |
| TiO₂ | 0 - 5 |
| SnO₂ | 0 - 2 |
| MoO₃ | 0.05 - 2 |

2. Aluminoborosilicate glass according to Claim 1, **characterized by** the following composition (in % by weight, based on oxide):
| | |
|---|---|
| SiO₂ | 53 - 68 |
| B₂O₃ | 3 - 13 |
| Al₂O₃ | 12 - 24 |
| MgO | 0.5 - 9 |
| CaO | ≤ 9 |
| SrO | ≤ 9 |
| BaO | 0 - 12 |
| with MgO+CaO+SrO+BaO | 8 - 24 |
| ZnO | 0 - 5 |
| ZrO₂ | 0 - 3 |
| TiO₂ | 0 - 3 |
| SnO₂ | 0 - 2 |
| MoO₃ | 0.1 - 1.5 |

3. Aluminoborosilicate glass according to Claim 1 or 2, **characterized by** the following composition (in % by weight, based on oxide):
| | |
|---|---|
| SiO₂ | > 55 - 65 |
| B₂O₃ | 5 - 11 |
| Al₂O₃ | > 14 - 23 |
| MgO | 3.3 - 8 |
| CaO | 0.5 - 8 |
| SrO | 0.5 - 8 |
| BaO | ≤ 10 |
| with MgO+CaO+SrO+BaO | 8 - 21 |
| ZnO | 0 - 5 |
| ZrO₂ | 0 - 2 |
| TiO₂ | 0 - 3 |
| SnO₂ | 0 - 2 |
| MoO₃ | 0.1 - 1.5 |

4. Aluminoborosilicate glass according to at least one of Claims 1 to 4, **characterized in that** the glass comprises at least > 4% by weight of MgO.

5. Aluminoborosilicate glass according to at least one of Claims 1 to 3, **characterized in that** the glass additionally comprises up to a total of 5% by weight of one or more of the elements from the group consisting of CeO₂, As₂O₃ , Sb₂O₃, P₂O₅, PbO, CdO, Ga₂O₃, Gd₂O₃, Fe₂O₃, La₂O₃, Nb₂O₅, Ta₂O₅, halides and sulphates.

6. Aluminoborosilicate glass according to at least one of Claims 1 to 4, **characterized in that** the glass comprises at least 0.1% by weight of SnO₂.

7. Aluminoborosilicate glass according to at least one of Claims 1 to 6 having a coefficient of expansion α_{20/300} of from 2.8 · 10⁻⁶/K to 5.0 · 10⁻⁶/K, a glass transition temperature T_{g} of > 650°C and a temperature at viscosity 10⁴ dPas of ≤ 1330°C.

8. Use of an aluminoborosilicate glass according to at least one of Claims 1 to 7 having a coefficient of thermal expansion α_{20/300} of ≤ 4.0 · 10⁻⁶/K as substrate glass in display technology.

9. Use of an aluminoborosilicate glass according to at least one of Claims 1 to 7 having a coefficient of thermal expansion α_{20/300} of ≤ 4.0 · 10⁻⁶/K as substrate glass in thin-film photovoltaics.

10. Use of an aluminoborosilicate glass according to at least one of Claims 1 to 7 having a coefficient of thermal expansion α_{20/300} of from 4.0 · 10⁻⁶/K and 5.0 · 10⁻⁶/K and a glass transition temperature T_{g} of ≥ 715°C as envelope glass for light bulbs.

## Revendications

1. Verre d'aluminoborosilicate exempt d'alcalis, ayant une qualité élevée pour ce qui est de l'absence de bulles, qui présente la composition suivante (en % en poids sur la base des oxydes):
| | |
|---|---|
| SiO₂ | 50 - 70 |
| B₂O₃ | 0,5 - 15 |
| Al₂O₃ | 10 - 25 |
| MgO | 0 - 10 |
| CaO | 0 - 12 |
| SrO | 0 - 12 |
| BaO | 0 - 15 |
| avec MgO+CaO+SrO+BaO | 8 - 26 |
| ZnO | 0 - 10 |
| ZrO₂ | 0 - 5 |
| TiO₂ | 0 - 5 |
| SnO₂ | 0 - 2 |
| MoO₃ | 0,05 - 2 |

2. Verre d'aluminoborosilicate selon la revendication 1, **caractérisé par** la composition suivante (en % en poids sur la base des oxydes)
| | |
|---|---|
| SiO₂ | 53 - 68 |
| B₂O₃ | 3 - 13 |
| Al₂O₃ | 12 - 24 |
| MgO | 0 , 5 - 9 |
| CaO | ≤ 9 |
| SrO | ≤ 9 |
| BaO | 0 - 12 |
| avec MgO+CaO+SrO+BaO | 8 - 24 |
| ZnO | 0 - 5 |
| ZrO₂ | 0 - 3 |
| TiO₂ | 0 - 3 |
| SnO₂ | 0 - 2 |
| MoO₃ | 0,1 - 1,5 |

3. Verre d'aluminoborosilicate selon la revendication 1 ou 2, **caractérisé par** la composition suivante (en % en poids sur la base des oxydes)
| | |
|---|---|
| SiO₂ | > 55 - 65 |
| B₂O₃ | 5 - 11 |
| Al₂O₃ | > 14 - 23 |
| MgO | 3,3 - 8 |
| CaO | 0,5 - 8 |
| SrO | 0,5 - 8 |
| BaO | ≤ 10 |
| avec MgO+CaO+SrO+BaO | 8 - 21 |
| ZnO | 0 - 5 |
| ZrO₂ | 0 - 2 |
| TiO₂ | 0 - 3 |
| SnO₂ | 0 - 2 |
| MoO₃ | 0,1 - 1,5 |

4. Verre d'aluminoborosilicate selon au moins l'une des revendications 1 à 4, **caractérisé en ce que** le verre contient au moins > 4 % en poids de MgO.

5. Verre d'aluminoborosilicate selon au moins l'une des revendications 1 à 3, **caractérisé en ce que** le verre contient jusqu'à en tout 5 % en poids d'un ou de plusieurs des éléments choisis parmi le groupe CeO₂, As₂O₃, Sb₂O₃, P₂O₅, PbO, CdO, Ga₂O₃, Gd₂O₃, Fe₂O₃, La₂O₃, Nb₂O₅, Ta₂O₅, halogénures, sulfates.

6. Verre d'aluminoborosilicate selon au moins l'une des revendications 1 à 4, **caractérisé en ce que** le verre contient au moins 0,1 % en poids de SnO₂.

7. Verre d'aluminoborosilicate selon au moins l'une des revendications 1 à 6, ayant un coefficient de dilatation α_{20/300} compris entre 2,8 • 10⁻⁶/K et 5,0 • 10⁻⁶/K, une température de transformation T_{g} > 650 °C et une température, à la viscosité de 10⁴ dPas, de ≤ 1330 °C.

8. Utilisation d'un verre d'aluminoborosilicate selon au moins l'une des revendications 1 à 7, ayant un coefficient de dilatation thermique α_{20/300} < 4,0 • 10⁻⁶/K, en tant que verre de substrat, dans la technique des affichages.

9. Utilisation d'un verre d'aluminoborosilicate selon au moins l'une des revendications 1 à 7, ayant un coefficient de dilatation thermique α_{20/300} ≤ 4,0 • 10⁻⁶/K, en tant que verre de substrat, dans la technique de photovoltaïque en couches minces.

10. Utilisation d'un verre d'aluminoborosilicate selon au moins l'une des revendications 1 à 7, ayant un coefficient de dilatation thermique α_{20/300} compris entre 4,0 • 10⁻⁶/K et 5,0 • 10⁻⁶/K et une température de transformation T_{g} ≤ 715 °C, en tant que verre d'ampoule pour les ampoules de lampe.
